# FASCICULE DE BREVET EUROPEEN

(11) **EP 2 944 008 B1**
(45) Date de publication et mention de la délivrance du brevet: **22.03.2017**
(21) Numéro de dépôt: 14703126.4
(22) Date de dépôt: 10.01.2014
(51) Int. Cl.: H02J 7/00

(54) **ÉQUILIBRAGE DE CHARGE DANS UNE BATTERIE ÉLECTRIQUE**
LADUNGSAUSGLEICH INNERHALB EINER ELEKTRISCHEN BATTERIE
BALANCING THE CHARGE IN AN ELECTRIC BATTERY

(30) Priorité: 11.01.2013 FR 1350265
(43) Date de publication de la demande: 18.11.2015
(73) Titulaire: Enerstone, 38402 Saint-Martin-d'Heres (FR)
(72) Inventeur: BAILLY, Alain, F-13790 Rousset (FR); CHUREAU, Alexandre, F-38402 Saint-Martin-D'Heres (FR)
(74) Mandataire: Thibon, Laurent
(86) Numéro de dépôt international: PCT/FR2014/050038
(87) Numéro de publication internationale: WO 2014/108645

(56) Documents cités:
- EP-A1- 2 131 471
- DE-A1-102008 043 593
- US-A1- 2009 195 079
- US-A1- 2010 327 807

## Description

La présente demande de brevet revendique la priorité de la demande de brevet français FR13/50265 qui sera considérée comme faisant partie intégrante de la présente description.

### Domaine

La présente demande concerne de façon générale les circuits électroniques, et vise plus particulièrement un système comprenant une batterie électrique et un circuit d'équilibrage des niveaux de charge de cellules de la batterie.

### Exposé de l'art antérieur

Une batterie électrique comprend habituellement un groupement de plusieurs cellules élémentaires (accumulateurs, etc.) reliées en série entre deux noeuds ou bornes de fourniture d'une tension continue. Pour maximiser les performances de la batterie et augmenter sa durée de vie, on peut connecter aux noeuds intermédiaires de l'association en série des cellules de la batterie, un circuit configuré pour équilibrer les niveaux de charge des cellules pendant les phases de charge et/ou de décharge de la batterie. Divers circuits d'équilibrage ont été proposés. A titre d'exemple, des dispositifs d'équilibrage sont décrits dans la demande de brevet US 2010/0327807 et dans la demande de brevet européen EP2131471. Ces circuits présentent toutefois tous leurs inconvénients propres.

### Résumé

Un objet d'un mode de réalisation est de prévoir un système d'équilibrage des niveaux de charge de cellules d'une batterie électrique, palliant tout ou partie des inconvénients des systèmes d'équilibrage existants.

Ainsi, un mode de réalisation prévoit un système comportant : une batterie électrique comprenant au moins quatre cellules élémentaires en série ; et au moins deux modules de transfert d'énergie ayant chacun des premier et deuxième noeuds reliés par au moins trois cellules de la batterie, et un troisième noeud relié à un point intermédiaire de l'association en série desdites au moins trois cellules, chaque module ayant au moins l'un de ses premier et deuxième noeuds non commun avec un premier ou deuxième noeud d'un autre module, et chaque module ayant son troisième noeud non commun avec un troisième noeud d'un autre module.

Selon un mode de réalisation, chaque module est adapté à transférer de l'énergie électrique de la ou les cellules reliant ses premier et troisième noeuds vers la ou les cellules reliant ses deuxième et troisième noeuds, et inversement.

Selon un mode de réalisation, chaque point intermédiaire de l'association en série des cellules de la batterie est relié à un troisième noeud d'un module non commun avec un troisième noeud d'un autre module.

Selon un mode de réalisation, le système comprend en outre un circuit de gestion configuré pour recevoir des informations concernant l'état de charge des cellules, et commander les modules de transfert en tenant compte de ces informations.

Selon un mode de réalisation, chaque module comprend au moins deux interrupteurs et un élément inductif.

Selon un mode de réalisation, les interrupteurs sont en série entre les premier et deuxième noeuds du module, et ledit élément inductif relie le point milieu entre les deux interrupteurs au troisième noeud du module.

Selon un mode de réalisation, chaque module comprend un circuit de commande de ses interrupteurs.

Selon un mode de réalisation, dans chaque module de transfert, les interrupteurs du module sont commandés en tenant compte d'une mesure du courant circulant dans l'élément inductif du module.

Selon un mode de réalisation, chacune des cellules de la batterie comprend du lithium et une électrode en phosphate de fer lithié.

Selon un mode de réalisation, les interrupteurs sont des transistors MOS.

### Brève description des dessins

Ces caractéristiques et leurs avantages, ainsi que d'autres, seront exposés en détail dans la description suivante de modes de réalisation particuliers faite à titre non limitatif en relation avec les figures jointes parmi lesquelles :
la figure 1 est un schéma électrique d'un exemple d'un système comprenant une batterie électrique et un circuit d'équilibrage de charge ;
la figure 2 est un schéma électrique d'un autre exemple d'un système comprenant une batterie électrique et un circuit d'équilibrage de charge ;
la figure 3 est un schéma électrique illustrant un mode de réalisation d'un système comprenant une batterie électrique et un circuit d'équilibrage de charge ;
la figure 4 est un schéma électrique illustrant plus en détail un exemple de réalisation d'un module d'équilibrage du circuit d'équilibrage de la figure 3 ;
la figure 5 est un schéma électrique illustrant une généralisation du système de la figure 3 ; et
les figures 6A à 6C sont des schémas électriques illustrant des variantes de réalisation d'un module d'équilibrage du circuit de la figure 5.

Par souci de clarté, de mêmes éléments ont été désignés par de mêmes références aux différentes figures. De plus, seuls les éléments utiles à la compréhension de l'invention ont été représentés et seront décrits.

### Description détaillée

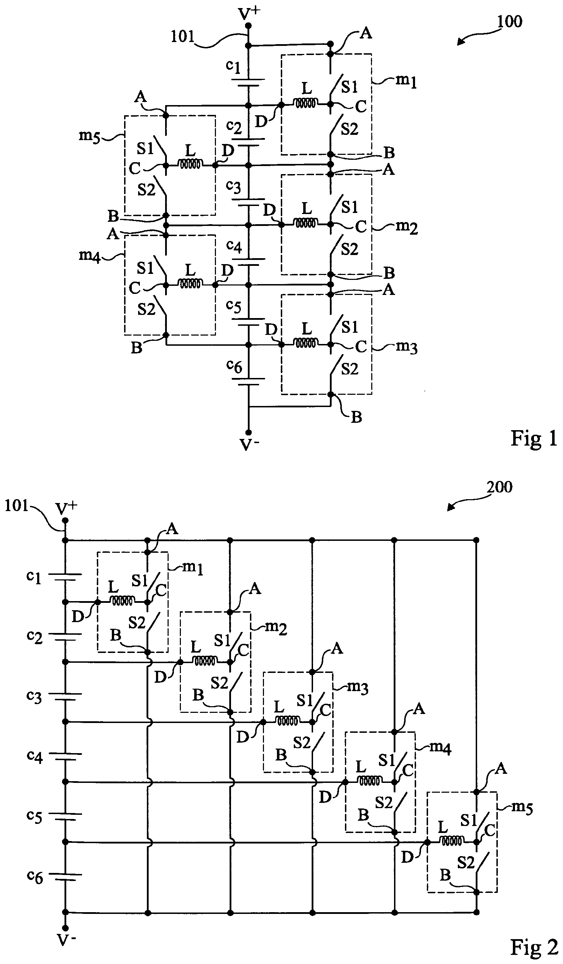

La figure 1 est un schéma électrique simplifié d'un exemple d'un système 100 comprenant une batterie électrique 101 et un circuit d'équilibrage de charge connecté à la batterie 101. Dans l'exemple représenté, la batterie 101 comprend six cellules cᵢ (i étant un entier allant de 1 à 6) connectées en série, par ordre d'indice croissant, entre des noeuds ou bornes V+ et V- de fourniture d'une tension continue. La borne positive de la cellule (c₁ et la borne négative de la cellule c₆ sont respectivement connectées aux bornes V+ et V- de la batterie, et chacune des cellules intermédiaires c₂ à c₅ de la batterie a sa borne positive connectée à la borne négative de la cellule voisine d'indice inférieur, et sa borne négative connectée à la borne positive de la cellule voisine d'indice supérieur. Dans cet exemple, le circuit d'équilibrage comprend cinq modules d'équilibrage ou module de transfert d'énergie mⱼ (j étant un entier allant de 1 à 5). Chaque module d'équilibrage mⱼ comprend deux interrupteurs S1 et S2, par exemple des transistors MOS, reliés en série entre des premier et second noeuds A et B du module, et un élément inductif L reliant le point milieu C entre les interrupteurs S1 et S2 du module à un troisième noeud D du module. Dans cet exemple, aucun élément intermédiaire n'est prévu entre les interrupteurs S1 et S2 d'un même module, les extrémités de l'association en série des interrupteurs S1 et S2 d'un module sont directement connectées respectivement aux noeuds A et B de ce module, et les extrémités de l'élément inductif L d'un module peuvent être directement connectées respectivement aux noeuds C et D du module. Les modes de réalisation décrits ne se limitent toutefois pas à ce cas particulier. Chaque module mⱼ peut en outre comprendre un circuit supplémentaire (non visible sur la figure 1) de contrôle de ses interrupteurs S1 et S2.

Dans l'exemple de la figure 1, chaque module d'équilibrage mⱼ a ses noeuds A, B et D connectés respectivement à la borne positive de la cellule cⱼ, à la borne négative de la cellule cⱼ₊₁, et au point milieu de l'association en série des cellules cⱼ et cⱼ₊₁ (à savoir le noeud connecté à la borne négative de la cellule cⱼ et à la borne positive de la cellule cⱼ₊₁). Ainsi, chaque module mⱼ peut, par l'intermédiaire de ses interrupteurs S1 et S2 et de son inductance L, transférer de l'énergie électrique de la cellule cⱼ vers la cellule cⱼ₊₁, ou inversement.

Le circuit d'équilibrage peut en outre comprendre un circuit de gestion, non représenté, configuré pour recevoir des informations concernant l'état de charge des cellules cᵢ, et commander en conséquence les modules mⱼ pour transférer de l'énergie électrique des cellules les plus chargées vers les cellules les moins chargées.

Un avantage du système d'équilibrage 100 de la figure 1 est qu'il permet de transférer efficacement de l'énergie électrique entre des cellules voisines. En effet, transférer de l'énergie électrique d'une cellule cⱼ vers l'une de ses voisines cⱼ₋₁ ou cⱼ₊₁ ne nécessite l'activation que d'un seul module d'équilibrage (mⱼ₋₁ ou mj).

Toutefois, un problème est que si l'on souhaite transférer de l'énergie entre deux cellules éloignées de la batterie, il est nécessaire de solliciter tous les modules d'équilibrage situés entre ces cellules, ce qui conduit à des pertes d'énergie relativement importantes, notamment par dissipation dans les interrupteurs S1 et S2 des modules sollicités.

La figure 2 est un schéma électrique d'un autre exemple d'un système 200 comprenant une batterie électrique 101, et un circuit d'équilibrage de charge connecté à la batterie 101. Dans l'exemple représenté, la batterie 101 est la même que dans l'exemple de la figure 1, et le circuit d'équilibrage comprend, comme dans l'exemple de la figure 1, cinq modules d'équilibrage ou modules de transfert d'énergie mj (j étant un entier allant de 1 à 5). Les modules d'équilibrage peuvent avoir le même schéma électrique que ceux décrits en relation avec la figure 1.

Le système 200 de la figure 2 diffère du système 100 de la figure 1 essentiellement par le schéma de connexion des modules d'équilibrage mⱼ à la batterie 101. Dans l'exemple de la figure 2, chaque module mⱼ a ses noeuds A, B et D connectés respectivement à la borne positive V+ de la batterie, à la borne négative V- de la batterie, et au point milieu de l'association en série des cellules cⱼ et cⱼ₊₁. Ainsi, chaque module d'équilibrage mⱼ, peut, par l'intermédiaire de ses interrupteurs S1 et S2 et de son inductance L, transférer de l'énergie électrique de la ou les cellules situées entre son noeud D et la borne V+ de la batterie (cellules c₁ à cⱼ), vers la ou les cellules situées entre son noeud D et la borne V- de la batterie (cellules cⱼ₊₁ à c₆), ou inversement.

Le circuit d'équilibrage peut en outre comprendre un circuit de gestion, non représenté, configuré pour recevoir des informations concernant l'état de charge des cellules cᵢ, et commander en conséquence les modules mⱼ pour transférer de l'énergie électrique des cellules les plus chargées vers les cellules les moins chargées.

Un avantage du système d'équilibrage 200 de la figure 2 est qu'il permet de transférer de l'énergie entre des cellules éloignées de la batterie, en activant un nombre de modules d'équilibrage moins important que dans le système de la figure 1.

Toutefois, un problème est que le système de la figure 2 est moins efficace que le système de la figure 1 pour transférer de l'énergie entre des cellules voisines de la batterie.

Un autre problème du système de la figure 2 est lié au fait que, dans le système de la figure 2, les interrupteurs S1 et S2 de chaque module d'équilibrage mⱼ voient à leurs bornes l'intégralité de la tension entre les bornes V+ et V- de la batterie. Il convient donc, dans le système de la figure 2, de choisir des interrupteurs à plus haute tenue en tension que dans le système de la figure 1, dans lequel les interrupteurs S1 et S2 voient seulement la tension entre les bornes de l'association en série de deux cellules élémentaires voisines. Ceci augmente le coût et l'encombrement du circuit d'équilibrage. De plus, ceci rend impossible l'équilibrage de la batterie au-delà d'une tension maximale conditionnée par la tenue en tension des interrupteurs, ce qui restreint la modularité du système. En outre, ceci augmente les pertes d'énergie électrique lors des transferts, dans la mesure où les interrupteurs à haute tenue en tension sont généralement plus résistifs, à l'état passant que les interrupteurs à plus faible tenue en tension.

Un objet d'un mode de réalisation est de résoudre tout ou partie des problèmes des systèmes d'équilibrage du type décrit en relation avec les figures 1 et 2.

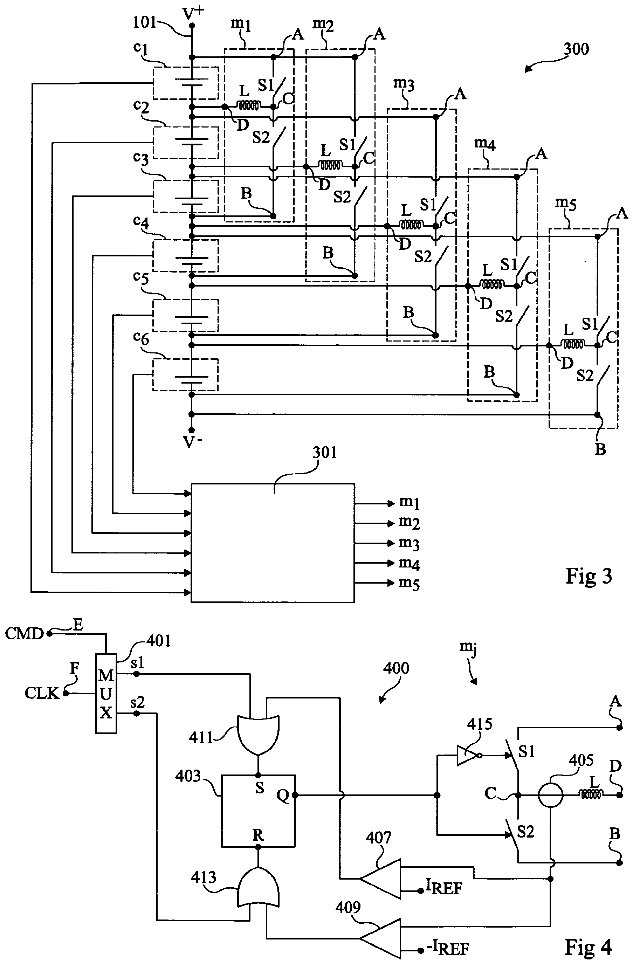

La figure 3 est un schéma électrique illustrant un exemple d'un mode de réalisation d'un système 300 comprenant une batterie électrique 101, et un circuit d'équilibrage de charge connecté à la batterie 101. Dans l'exemple représenté, la batterie 101 est la même que dans les exemples des figures 1 et 2, et le circuit d'équilibrage comprend, comme dans les exemples des figures 1 et 2, cinq modules d'équilibrage ou modules de transfert d'énergie électrique mⱼ (j étant un entier allant de 1 à 5). Les modules d'équilibrage mj peuvent avoir le même schéma électrique que ceux décrits en relation avec les figures 1 et 2.

Le système 300 de la figure 3 diffère des systèmes des figures 1 et 2 essentiellement par le schéma de connexion des modules d'équilibrage mj à la batterie 101. Dans l'exemple de la figure 3, chaque module mⱼ, à l'exception des deux modules extrêmes m₁ et m₅, a ses noeuds A, B et D connectés respectivement à la borne positive de la cellule cⱼ₋₁, à la borne négative de la cellule cⱼ₊₂, et au point milieu de l'association en série des cellules cⱼ₋₁ à cⱼ₊₂ (c'est-à-dire au noeud de connexion entre la borne négative de la cellule cⱼ et la borne positive de la cellule cⱼ₊₁). Dans cet exemple, les noeuds A, B et D du module m₁ sont connectés respectivement à la borne V+ de la batterie, à la borne négative de la cellule c₃, et au point milieu de l'association en série des cellules c₁ et c₂, et les noeuds A, B et D du module m₅ sont connectés respectivement à la borne positive de la cellule c₄, à la borne V- de la batterie, et au point milieu de l'association en série des cellules c₅ et c₆. Ainsi, chaque module d'équilibrage mⱼ, à l'exception des deux modules extrêmes m₁ et m₅, peut, par l'intermédiaire de ses interrupteurs S1 et S2, transférer de l'énergie électrique depuis l'association en série des cellules cⱼ₋₁ et cⱼ vers l'association en série des cellules cⱼ₊₁ et cⱼ₊₂, ou inversement. Le module m₁ peut, par l'intermédiaire de ses interrupteurs S1 et S2, transférer de l'énergie de la cellule c₁ vers les cellules c₂ et c₃ ou inversement. Le module m₅ peut, par l'intermédiaire de ses interrupteurs S1 et S2, transférer de l'énergie des cellules c₄ et c₅ vers la cellule c₆ ou inversement.

Le circuit d'équilibrage peut en outre comprendre un circuit de gestion 301, configuré pour recevoir des informations concernant l'état de charge des cellules cᵢ, et commander en conséquence les modules mⱼ pour transférer de l'énergie électrique des cellules ou groupes de cellules les plus chargés vers les cellules ou groupes de cellules les moins chargés. A titre d'exemple l'état de charge des cellules cᵢ peut être déterminé par des mesures de tension et/ou de courant ou par tout autre moyen connu.

Un avantage du système d'équilibrage 300 de la figure 3 est qu'il permet de transférer de l'énergie entre des cellules éloignées de la batterie en sollicitant un nombre de modules d'équilibrage moins important que dans le système de la figure 1. Ceci permet notamment, lors de transferts d'énergie entre des cellules éloignées de la batterie, de réduire les pertes résistives dans les interrupteurs des modules d'équilibrage par rapport au système de la figure 1.

Un autre avantage du système de la figure 3 est qu'il est plus efficace que le système de la figure 2 pour transférer de l'énergie entre des cellules voisines ou rapprochées de la batterie.

Un autre avantage du système de la figure 3 est que les interrupteurs S1 et S2 des modules d'équilibrage mⱼ ne voient pas l'intégralité de la tension entre les bornes V+ et V-de la batterie, mais voient seulement la tension aux bornes de l'association en série de trois ou quatre cellules élémentaires. On peut donc utiliser des interrupteurs à plus faible tenue en tension que dans le système de la figure 2. Ceci permet notamment de réduire le coût, l'encombrement et la consommation électrique du circuit d'équilibrage par rapport au système de la figure 2. Ceci permet en outre de conférer une plus grande modularité au système.

Un autre avantage du système de la figure 3 est qu'il permet des transferts d'énergie plus efficaces et plus rapides entre des cellules voisines ou rapprochées de la batterie par rapport à un système connu du type représenté en figure 4 de la demande de brevet US 2010/0327807 susmentionnée, dans lequel tous les modules d'équilibrage ont un noeud intermédiaire connecté au même noeud central de l'association en série des cellules de la batterie. En d'autres termes, dans le système de la figure 3, le fait que les différents modules d'équilibrage mⱼ aient leurs noeuds D connectés à des points distincts de l'association en série des cellules de la batterie augmente le nombre de scénarios d'équilibrage possibles par rapport au système de la figure 4 de la demande US 2010/0327807.

Un autre avantage du système de la figure 3 est qu'il présente une plus grande modularité que le système de la figure 4 de la demande US 2010/0327807. En effet, dans le système de la figure 3, tous les modules d'équilibrage voient approximativement la même tension à leurs bornes, indépendamment de la tension totale de la batterie, alors que dans le système de la figure 4 de la demande US 2010/0327807 tous les modules d'équilibrage voient des tensions différentes à leurs bornes.

Le système de la figure 3 présente en outre des avantages similaires ou identiques par rapport aux systèmes d'équilibrage de la demande de brevet EP2131471 susmentionnée. On notera de plus que la demande EP2131471 concerne des systèmes d'équilibrage par dissipation de l'énergie électrique des cellules dont la tension est trop importante, et non pas des systèmes par transfert d'énergie inter-cellules du type décrit en relation avec les figures 1 à 3 de la présente demande.

Le mode de réalisation décrit en relation avec la figure 3 ne se limite bien entendu pas à des systèmes dans lesquels la batterie comporte six cellules élémentaires, mais s'applique plus généralement à toute batterie comportant au moins quatre cellules élémentaires en série.

Quel que soit le nombre n de cellules cᵢ en série (avec i entier allant de 1 à n et n ≥ 4), on prévoit de préférence un circuit d'équilibrage comportant n-1 modules d'équilibrage mⱼ (avec j entier allant de 1 à n-1), chaque module mⱼ ayant son noeud D connecté au point milieu de l'association en série des cellules cⱼ et cⱼ₊₁.

Dans l'exemple de la figure 3, chaque module mⱼ a ses noeuds A et B reliés par l'association en série de trois ou quatre cellules de la batterie. A titre de variante, on peut prévoir que chaque module d'équilibrage mj ait ses noeuds A et B reliés par un plus grand nombre de cellules, pourvu qu'au moins un module mⱼ du circuit d'équilibrage ne reçoive pas l'intégralité de la tension de la batterie entre ses noeuds A et B.

Dans un mode de réalisation préféré, dans chaque module mⱼ, à l'exception des modules ayant leur noeud D connecté aux cellules les plus proches des bornes V+ et V- de la batterie, le nombre de cellules cᵢ situées entre les noeuds A et D du module est le même que le nombre de cellules cᵢ situées entre les noeuds D et B du module (ce nombre étant supérieur ou égal à 2).

En d'autres termes, on peut prévoir un système comportant : une batterie électrique ayant au moins quatre cellules élémentaires en série ; et au moins deux modules d'équilibrage mⱼ, chaque module mj ayant ses noeuds A et B reliés par l'association en série d'au moins trois cellules de la batterie, et son noeud D relié à un noeud intermédiaire de cette association en série, chaque module mⱼ ayant au moins l'un de ses noeuds A et B non commun avec un noeud A ou B d'un autre module.

Des exemples de modes de commande des modules d'équilibrage mⱼ décrits en relation avec les figures 1 à 3 vont maintenant être décrits. Dans ces exemples, pendant une période d'activation d'un module mⱼ, les interrupteurs S1 et S2 de ce module sont commandés de manière complémentaire (c'est-à-dire que lorsque l'interrupteur S1 est fermé, l'interrupteur S2 est ouvert, et inversement), de façon que les interrupteurs S1 et S2 ne soient jamais fermés en même temps, ce qui court-circuiterait les cellules situées entre les noeuds A et B du module. De plus, chaque module mⱼ peut être désactivé par l'ouverture simultanée de ses deux interrupteurs S1 et S2.

La commande des modules d'équilibrage mⱼ peut être une commande dite passive, c'est-à-dire une commande dans laquelle, pendant une période d'activation d'un module m_{j,} le sens des déplacements d'énergie électrique entre la ou les cellules situées entre les noeuds A et D du module d'une part, et la ou les cellules situées entre les noeuds B et D du module d'autre part, ainsi que la quantité d'énergie transférée, dépendent essentiellement des niveaux de tension entre les noeuds A et D d'une part, et entre les noeuds D et B d'autre part. Lorsqu'une commande passive est mise en oeuvre, de l'énergie électrique est naturellement transférée depuis l'association en série de cellules entre les noeuds A et D ou entre les noeuds D et B qui présente le niveau de tension le plus élevé, vers l'association en série de cellules entre les noeuds D et B ou entre les noeuds A et D qui présente le niveau de tension le plus faible, et ce jusqu'à ce que les niveaux de tension s'équilibrent ou que le module soit désactivé.

A titre d'exemple, dans un premier mode de commande passif, les interrupteurs S1 et S2 du module peuvent être fermés puis ouverts périodiquement, à fréquence constante et avec un rapport cyclique ouverture/fermeture constant (par exemple de 0,5). Après un certain temps, les niveaux de tension entre les deux étages (A-D et D-B) du module convergent naturellement vers une même valeur.

A titre de variante, dans un deuxième mode de commande passif, on peut en outre prévoir de limiter le courant dans l'élément inductif L du module, ce qui permet notamment de limiter les pertes par dissipation dans les interrupteurs S1 et S2 du module. Pour cela, on peut prévoir de mesurer le courant circulant dans l'élément inductif L, et, lorsque ce courant dépasse un seuil positif ou négatif, de forcer la commutation des interrupteurs S1 et S2 de façon à inverser la tension aux bornes de l'élément L. Ainsi, dans le deuxième mode de commande passif, le rapport cyclique d'ouverture/fermeture des interrupteurs n'est plus constant, mais s'ajuste automatiquement en fonction de la différence de niveau de tension entre les deux étages du module. Après un certain temps, les niveaux de tension entre les deux étages du module convergent naturellement vers une même valeur.

Les modes de commande passifs présentent l'avantage d'être relativement simples à mettre en oeuvre. Toutefois, un problème est que les transferts d'énergie d'une cellule ou d'un groupe de cellules vers une autre cellule ou un autre groupe de cellules, sont basés principalement sur les différences de niveau de tension entre ces cellules ou groupes de cellules. Ceci ne permet pas toujours d'équilibrer efficacement la batterie, notamment lorsque les cellules sont réalisées dans des technologies dans lesquelles le niveau de tension d'une cellule n'est pas ou peu représentatif de son état de charge, ce qui est par exemple le cas de certaines cellules au lithium, et en particulier des cellules lithium fer phosphate (LiFePO₄), c'est-à-dire des cellules lithium-ion comprenant une électrode en phosphate de fer lithié.

Pour pallier ce problème, la commande des modules d'équilibrage peut être une commande dite active, c'est-à-dire une commande dans laquelle, pendant une période d'activation d'un module mj, on force le sens de déplacement de l'énergie électrique dans le module, ainsi que la quantité d'énergie électrique déplacée, indépendamment des niveaux de tension entre les noeuds A et D du module d'une part, et entre les noeuds D et B du module d'autre part.

La figure 4 est un schéma électrique illustrant plus en détail un exemple de réalisation d'un module d'équilibrage mⱼ du type décrit en relation avec les figures 1 à 3, comportant un circuit de contrôle adapté à la mise en oeuvre d'une commande active du module. Le module mⱼ de la figure 4 comprend les mêmes éléments que les modules d'équilibrage déjà décrits en relation avec les figures 1 à 3, à savoir deux interrupteurs S1 et S2 en série entre des noeuds A et B du module, et un élément inductif L entre le point milieu C entre les interrupteurs S1 et S2 et un noeud D du module. Le module mⱼ de la figure 4 comporte en outre un circuit 400 de commande de ses interrupteurs S1 et S2.

Dans cet exemple, le circuit 400 comprend un noeud E d'application d'un signal CMD de commande de direction de transfert de l'énergie électrique par le module, et un noeud F d'application d'un signal d'impulsions périodiques ou signal d'horloge CLK. Les signaux CMD et CLK peuvent être fournis par un circuit de gestion extérieur au module, par exemple le circuit de gestion 301 (BMS) de la figure 3. A titre de variante, le signal d'horloge CLK peut être fourni par un circuit (non représenté) interne au module mⱼ. Le circuit 400 comprend de plus un multiplexeur 401 recevant en entrée les signaux CLK et CMD, et comportant deux sorties s1 et s2. Le fonctionnement du multiplexeur 401 est tel que lorsque le signal CMD est à l'état haut, le signal CLK est aiguillé sur la sortie s1 du multiplexeur, et la sortie s2 du multiplexeur est maintenue à l'état bas, et lorsque le signal CMD est à l'état bas, le signal CLK est aiguillé sur la sortie s2 du multiplexeur, et la sortie s1 du multiplexeur est maintenue à l'état bas. Le circuit 400 comprend en outre une bascule SR ("SR latch" en anglais) 403, comportant deux entrées S et R et une sortie Q. Le fonctionnement de la bascule 403 est tel que dès que l'entrée S est mise à l'état haut, la sortie Q est mise à l'état haut, et dès que l'entrée R est mise à l'état haut, la sortie Q est mise à l'état bas. Lorsqu'aucune des entrées S et R n'est à l'état haut, la sortie Q conserve son état précédent. Le circuit 400 comprend en outre un dispositif 405 de mesure du courant circulant dans l'élément inductif L du module, et deux comparateurs 407 et 409 configurés pour comparer la valeur de courant mesurée par le dispositif 405 respectivement à un seuil positif I_{REF} et à un seuil négatif -I_{REF}. Dans cet exemple, la sortie du comparateur 407 est à l'état bas lorsque le courant mesuré dans l'élément inductif L est inférieur au seuil I_{REF}, et à l'état haut lorsque le courant mesuré dans l'élément inductif L est supérieur au seuil I_{REF}, et la sortie du comparateur 409 est à l'état bas lorsque le courant mesuré dans l'élément inductif L est supérieur au seuil -I_{REF}, et à l'état haut lorsque le courant mesuré dans l'élément inductif L est inférieur au seuil -I_{REF}. Le circuit 400 comprend en outre une porte OU 411 comportant deux entrées reliées respectivement à la sortie s1 du multiplexeur 401 et à la sortie du comparateur 407, et une porte OU 413 comportant deux entrées reliées respectivement à la sortie s2 du multiplexeur 401 et à la sortie du comparateur 409. La sortie de la porte OU 411 est reliée à l'entrée S de la bascule 403, et la sortie de la porte OU 413 est reliée à l'entrée R de la bascule 403. La sortie Q de la bascule 403 est reliée à un noeud de commande de l'interrupteur S2, et à l'entrée d'un inverseur 415 dont la sortie est reliée à un noeud de commande de l'interrupteur S1. Le circuit 400 peut en outre comprendre un circuit d'activation/désactivation, non représenté, configuré pour ouvrir simultanément les deux interrupteurs S1 et S2 du module lorsqu'un signal de désactivation est reçu par le module.

Pendant une période d'activation du module mj, lorsque le signal CMD est à l'état haut, le signal CLK est aiguillé sur la sortie s1 du multiplexeur 401, et la sortie s2 du multiplexeur est à l'état bas. Une impulsion positive du signal CLK conduit à faire passer la sortie Q de la bascule 403 à l'état haut, et donc à fermer l'interrupteur S2 et ouvrir l'interrupteur S1. Il circule alors un courant négatif dans l'inductance L, allant du noeud D vers le noeud B. Tant que le courant mesuré dans l'inductance L est supérieur au seuil -I_{REF}, la sortie Q de la bascule ne change pas d'état. Lorsque le courant mesuré dans l'inductance L devient inférieur au seuil -I_{REF}, la sortie du comparateur 409 passe à l'état haut, ce qui entraîne la mise à l'état bas de la sortie Q de la bascule 403, et donc la commutation des interrupteurs S1 et S2. Ceci provoque l'inversion du signe de la tension aux bornes de l'inductance L, et donc l'augmentation du courant circulant dans l'inductance L. La sortie du comparateur 409 repasse alors à l'état bas. La sortie Q de la bascule 403 reste à l'état bas jusqu'à la prochaine impulsion du signal CLK, puis le cycle décrit au présent paragraphe recommence.

Lorsque le signal CMD est à l'état haut, le signal CLK est aiguillé sur la sortie s2 du multiplexeur 401, et la sortie s1 du multiplexeur est à l'état bas. Une impulsion positive du signal CLK conduit à faire passer la sortie Q de la bascule 403 à l'état bas, et donc à fermer l'interrupteur S1 et ouvrir l'interrupteur S2. Il circule alors un courant positif dans l'inductance L, allant du noeud A vers le noeud D. Tant que le courant mesuré dans l'inductance L est inférieur au seuil I_{REF}, la sortie Q de la bascule ne change pas d'état. Lorsque le courant mesuré dans l'inductance L devient supérieur au seuil I_{REF}, la sortie du comparateur 407 passe à l'état haut, ce qui entraîne la mise à l'état haut de la sortie Q de la bascule 403, et donc la commutation des interrupteurs S1 et S2. Ceci provoque l'inversion du signe de la tension aux bornes de l'inductance L, et donc la diminution du courant circulant dans l'inductance L. La sortie du comparateur 407 repasse alors à l'état bas. La sortie Q de la bascule 403 reste à l'état haut jusqu'à la prochaine impulsion du signal CLK, puis le cycle décrit au présent paragraphe recommence.

Ainsi, l'état du signal CMD détermine le sens de circulation du courant dans l'inductance L du module, les comparateurs 407 et 409 permettant de limiter l'intensité de ce courant. Le temps d'activation du module détermine la quantité d'énergie transférée.

D'autres modes de commande actifs ou passifs que ceux décrits dans la présente demande peuvent être utilisés pour commander les modules d'équilibrage mⱼ. En outre, quel que soit le mode de commande actif ou passif utilisé, les modes de réalisation revendiqués ne se limitent pas au cas où la commande d'un module d'équilibrage mⱼ est mise en oeuvre via un circuit de contrôle inclus dans ce module. A titre de variante, on peut prévoir de déporter tout ou partie des fonctions de contrôle des interrupteurs S1 et S2 du module dans un circuit de gestion extérieur, par exemple le circuit de gestion 301 (BMS) de la figure 3, un microcontrôleur (non représenté), etc. A titre d'exemple, le circuit de gestion 301 (BMS) de la figure 3 peut être configuré pour mesurer directement le courant circulant dans l'élément inductif L de chacun des modules mⱼ, et commander directement les interrupteurs S1 et S2 des modules. A titre de variante, chaque module d'équilibrage peut comprendre un microcontrôleur relié au circuit de gestion 301 (BMS). Par ailleurs, dans le cas d'une commande active des modules d'équilibrage, l'homme de l'art saura prévoir d'autres circuits de contrôle que le circuit 400 décrit en relation avec la figure 4.

D'autres modes de réalisation des modules d'équilibrage ou de transfert d'énergie mⱼ que ceux décrits en relation avec les figures 1 à 4 peuvent être prévus. Plus particulièrement, le mode de réalisation de la figure 3 est compatible avec tout module d'équilibrage adapté à transférer de l'énergie électrique depuis des cellules élémentaires reliant des premier et deuxième noeuds du module, vers des cellules élémentaires reliant le deuxième noeud à un troisième noeud du module, ou inversement.

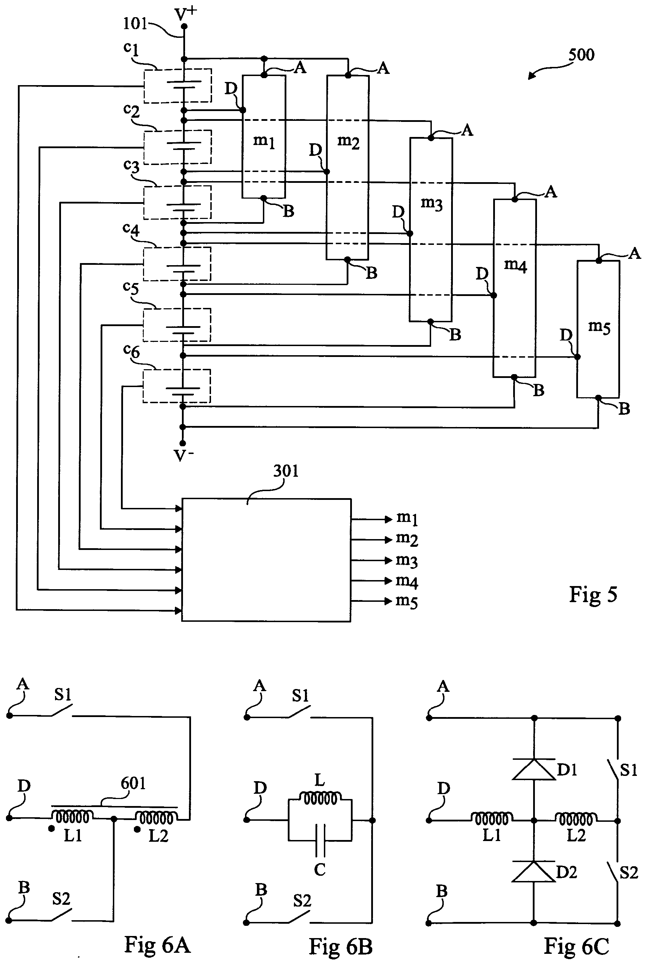

La figure 5 est un schéma électrique représentant une généralisation du système de la figure 3 à tout module d'équilibrage adapté à transférer de l'énergie électrique depuis des cellules élémentaires reliant des premier et deuxième noeuds du module, vers des cellules élémentaires reliant le deuxième noeud à un troisième noeud du module, ou inversement. La figure 5 représente un système 500 comprenant une batterie électrique 101 et un circuit d'équilibrage de charge connecté à la batterie 101. Dans l'exemple de la figure 5, la batterie 101 est la même que dans les exemples des figures 1 à 3, et le circuit d'équilibrage comprend, comme dans les exemples des figures 1 à 3, cinq modules d'équilibrage ou modules de transfert d'énergie électrique mⱼ (j étant un entier allant de 1 à 5). Sur la figure 5, les modules d'équilibrage mj ont été schématisés par des blocs ou boîtes noires ayant chacun trois noeuds de connexion A, B et D, le détail de réalisation de ces blocs n'a pas été représenté. Fonctionnellement, chaque module d'équilibrage mj est, comme dans les exemples décrits en relation avec les figures 1 à 4, adapté à transférer de l'énergie électrique, par exemple par transfert inductif d'énergie, depuis des cellules élémentaires reliant ses noeuds A et D, vers des cellules élémentaires reliant ses noeuds D et B, ou inversement. Dans le système 500 de la figure 5, les modules d'équilibrage mⱼ peuvent être connectés selon les modes de connexion décrits en relation avec la figure 3, c'est-à-dire que chaque module mⱼ a ses noeuds A et B reliés par l'association en série d'au moins trois cellules de la batterie, et son noeud D relié à un point intermédiaire de l'association en série de cellules reliant ses noeuds A et B, au moins un module mj ne recevant pas l'intégralité de la tension de la batterie entre ses noeuds A et B.

Les modules d'équilibrage mⱼ du système 500 peuvent avoir une topologie du type décrit en relation avec les figures 1 à 4, c'est-à-dire comporter deux interrupteurs en série entre les noeuds A et B du module, et une inductance reliant le noeud D du module au point milieu entre les deux interrupteurs. Alternativement, les modules d'équilibrage mⱼ du système 500 peuvent avoir d'autres topologies. Les figures 6A à 6C représentent de façon schématique d'autres exemples de topologie des modules mⱼ du système 500.

La figure 6A est un schéma électrique simplifié illustrant un exemple de réalisation d'un module d'équilibrage ou de transfert d'énergie mⱼ du système 500 de la figure 5.

Dans cet exemple, le module mⱼ comprend deux inductances L1 et L2 en série, couplées entre elles par un circuit magnétique 601. Le noeud D du module est relié à une extrémité de l'association en série des deux inductances L1 et L2, l'autre extrémité de l'association en série d'inductances étant reliée au noeud A par l'intermédiaire d'un interrupteur S1. Le point milieu de l'association en série des inductances L1 et L2 est relié au noeud B par l'intermédiaire d'un interrupteur S2. Le module mj peut en outre comprendre un circuit supplémentaire (non représenté) de contrôle de ses interrupteurs S1 et S2, ce circuit de contrôle pouvant être adapté à la mise en oeuvre d'une commande passive et/ou active du module.

La topologie de la figure 6A est tout particulièrement adaptée au cas où le nombre de cellules élémentaires de la batterie entre les noeuds A et D du module n'est pas le même que le nombre de cellules élémentaires entre les noeuds D et B du module. Le nombre de spires de l'inductance L2 peut être ajusté en fonction de la différence entre le nombre de cellules connectées entre les noeuds B et D du module, et le nombre de cellules connectées entre les noeuds A et D du module, de façon à adapter les courants aux nombres de cellules connectées.

La figure 6B est un schéma électrique simplifié illustrant un autre exemple de réalisation d'un module d'équilibrage ou de transfert d'énergie mⱼ du système 500 de la figure 5.

Dans cet exemple, le module mⱼ comprend deux interrupteurs S1 et S2 en série entre les noeuds A et B du module, et une inductance L reliant le point milieu de l'association en série des interrupteurs S1 et S2, au noeud D du module. Le module mⱼ de la figure 6B comprend en outre un élément capacitif C connecté en parallèle de l'inductance L, entre le point milieu de l'association en série des interrupteurs S1 et S2 et le noeud D du module. Le module mⱼ peut en outre comprendre un circuit supplémentaire (non représenté) de contrôle de ses interrupteurs S1 et S2, ce circuit de contrôle pouvant être adapté à la mise en oeuvre d'une commande passive et/ou active du module.

Par rapport aux modes de réalisation décrits en relation avec les figures 1 à 4, l'adjonction de l'élément capacitif C permet d'obtenir une résonance du module à certaines fréquences.

La figure 6C est un schéma électrique simplifié illustrant un autre exemple de réalisation d'un module d'équilibrage ou de transfert d'énergie mⱼ du système 500 de la figure 5.

Dans cet exemple, le module mⱼ comprend deux interrupteurs S1 et S2 en série entre les noeuds A et B du module, et deux inductances L1 et L2 en série entre le noeud D du module et le point milieu de l'association en série des interrupteurs S1 et S2. Dans cet exemple, l'inductance L1 est située côté noeud D, et l'inductance L2 est située du côté du point milieu de l'association en série des interrupteurs S1 et S2. L'inductance L2 est de préférence de plus faible valeur que l'inductance L1. Dans cet exemple, le module mⱼ comprend en outre une diode D1 entre le point milieu de l'association en série des inductances L1 et L2 et le noeud A, et une diode D2 entre le point milieu de l'association en série des inductances L1 et L2 et le noeud B. La cathode de la diode D1 est côté noeud A, et l'anode de la diode D2 est côté noeud B. Le module mⱼ peut en outre comprendre un circuit supplémentaire (non représenté) de contrôle de ses interrupteurs S1 et S2, ce circuit de contrôle pouvant être adapté à la mise en oeuvre d'une commande passive et/ou active du module.

Par rapport aux modes de réalisation décrits en relation avec les figures 1 à 4, la topologie de la figure 6C permet d'adoucir la commutation des interrupteurs S1 et S2, et d'éviter des pics parasites de tension et/ou de courant.

Des modes de réalisation particuliers ont été décrits. Diverses variantes et modifications apparaîtront à l'homme de l'art.

En particulier, l'homme de l'art saura réaliser un système du type décrit en relation avec les figures 3 et 5 en utilisant d'autres topologies de modules d'équilibrage ou de transfert d'énergie que celles décrites ci-dessus.

De plus, dans les modes de réalisation décrits ci-dessus, les modules d'équilibrage ou de transfert d'énergie mⱼ peuvent être utilisés à d'autres fins que l'équilibrage des niveaux de charge des cellules de la batterie. A titre d'exemple, en cas de défaillance d'une cellule, ou en vue de réaliser un diagnostic d'une cellule, on peut prévoir des transferts d'énergie ne visant pas à équilibrer les niveaux de charge mais visant par exemple à décharger entièrement une ou plusieurs cellules, ou à charger au maximum une ou plusieurs cellules. Par ailleurs, les transferts d'énergie peuvent être réalisés non seulement pendant les phases de charge et/ou de décharge de la batterie, mais aussi lorsque la batterie est au repos.

## Revendications

1. Système (300 ; 500) comportant :
une batterie électrique (101) comprenant au moins quatre cellules élémentaires (cᵢ) en série ; et
au moins deux modules de transfert d'énergie (mⱼ) ayant chacun des premier (A) et deuxième (B) noeuds reliés par au moins trois cellules (cᵢ) de la batterie, et un troisième noeud (D) relié à un point intermédiaire de l'association en série desdites au moins trois cellules (cᵢ), chaque module (mⱼ) ayant au moins l'un de ses premier (A) et deuxième (B) noeuds non commun avec un premier (A) ou deuxième (B) noeud d'un autre module, et chaque module (mⱼ) ayant son troisième noeud (D) non commun avec un troisième noeud (D) d'un autre module.

2. Système (300 ; 500) selon la revendication 1, dans lequel chaque module (mⱼ) est adapté à transférer de l'énergie électrique de la ou les cellules (cᵢ) reliant ses premier (A) et troisième (D) noeuds vers la ou les cellules (cᵢ) reliant ses deuxième (B) et troisième (D) noeuds, et inversement.

3. Système (300 ; 500) selon la revendication 1 ou 2, comprenant en outre un circuit (301) de gestion configuré pour recevoir des informations concernant l'état de charge des cellules (cᵢ), et commander les modules de transfert (mⱼ) en tenant compte de ces informations.

4. Système (300 ; 500) selon l'une quelconque des revendications 1 à 3, dans lequel chaque module (mⱼ) comprend au moins deux interrupteurs (S₁, S2) et un élément inductif (L ; L1).

5. Système (300 ; 500) selon la revendication 4, dans lequel lesdits interrupteurs (S1, S2) sont en série entre les premier (A) et deuxième (B) noeuds du module, et ledit élément inductif (L) relie le point milieu entre les deux interrupteurs (S1, S2) au troisième noeud (D) du module.

6. Système (300 ; 500) selon la revendication 4 ou 5, dans lequel chaque module (mⱼ) comprend un circuit (400) de commande de ses interrupteurs (S1, S2).

7. Système (300 ; 500) selon l'une quelconque des revendications 4 à 6, dans lequel dans chaque module de transfert (mⱼ), les interrupteurs (S1, S2) du module sont commandés en tenant compte d'une mesure du courant circulant dans l'élément inductif (L) du module.

8. Système (300 ; 500) selon l'une quelconque des revendications 1 à 7, dans lequel chacune des cellules (cᵢ) de la batterie comprend du lithium et une électrode en phosphate de fer lithié.

9. Système (300 ; 500) selon l'une quelconque des revendications 4 à 7, dans lequel lesdits interrupteurs (S1, S2) sont des transistors MOS.

## Patentansprüche

1. System (300; 500), die Folgendes aufweist:
eine elektrische Batterie (101), die wenigstens vier in Reihe geschaltete Elementarzellen (cᵢ) aufweist; und
wenigstens zwei Leistungsübertragungseinheiten (mⱼ), bei denen jeweils die ersten (A) und zweiten (B) Knoten verbunden sind, und zwar durch wenigstens drei Zellen (cᵢ) der Batterie, und ein dritter Knoten (D), der mit einem Zwischenpunkt der Serienverbindung von wenigstens drei Zellen (ci) verbunden ist, wobei jede Einheit (mj) wenigstens eine seiner ersten (A) und zweiten (B) Knoten nicht gemeinsam mit einem ersten (A) oder zweiten (B) Knoten einer anderen Einheit hat, und jede Einheit (mⱼ) seinen dritten Knoten (D) nicht gemeinsam mit einem dritten Knoten (D) einer anderen Einheit hat.

2. System (300; 500) gemäß Anspruch 1, wobei jede Einheit (mⱼ) in der Lage ist, elektrischen Strom von der Zelle/den Zellen (cᵢ), die ihre ersten (A) und dritten (D) Knoten verbinden, weiterzuleiten zu den Zellen (cᵢ), die ihre zweiten (B) und dritten (D) Knoten verbinden, und umgekehrt.

3. System (300; 500) gemäß Anspruch 1 oder 2, die ferner eine Steuerschaltung (301) aufweist, die konfiguriert ist, um Daten bezüglich dem Zustand der Zellenaufladung (cᵢ) zu erhalten, und um die Transfereinheiten (mⱼ) durch Hinzuziehen dieser Daten zu kontrollieren.

4. System (300; 500) gemäß einem der Ansprüche 1 bis 3, wobei jede Einheit (mⱼ) wenigstens zwei Schalter (S1, S2) und ein induktives Element (L; L1) aufweist.

5. System (300; 500) gemäß Anspruch 4, wobei die Schalter (S1, S2) zwischen dem ersten (A) und zweiten (B) Knoten der Einheit in Reihe geschaltet sind, und das induktive Element (L) die Knotenpunkte der zwei Schalter (S1, S2) mit einem dritten Knoten (D) der Einheit verbindet.

6. System (300; 500) gemäß Anspruch 4 oder 5, wobei jede Einheit (mⱼ) einen Schaltkreis (400) zum Steuern seiner Schalter (S1, S2) aufweist.

7. System (300; 500) gemäß einem der Ansprüche 4 bis 6, wobei in jeder Transfereinheit (mⱼ) die Schalter (S1, S2) der Einheit unter Berücksichtigung einer Messung der Stromstärke, die durch das induktive Element (L) der Einheit fließt, kontrolliert werden.

8. System (300; 500) gemäß einem der Ansprüche 1 bis 7, wobei jede der Batteriezellen (cᵢ) Lithium und eine Lithium-Eisen-Phosphat-Elektrode aufweist.

9. System (300; 500) gemäß einem der Ansprüche 4 bis 7, wobei die Schalter (S1, S2) MOS-Transistoren sind.

## Claims

1. A system (300; 500) comprising:
an electric battery (101) comprising at least four series-connected elementary cells (cᵢ); and
at least two power transfer units (mⱼ) each having first
(A) and second (B) nodes connected, through at least three cells (cᵢ) of the battery, and a third node (D) connected to an intermediate point of the series association of said at least three cells (cᵢ), each unit (mⱼ) having at least one of its first (A) and second (B) nodes non-common with a first (A) or second (B) node of another unit, and each unit (mⱼ) having its third node (D) non-common with a third node (D) of another unit.

2. The system (300; 500) of claim 1, wherein each unit (mⱼ) is capable of transferring electric power from the cell(s) (cᵢ) connecting its first (A) and third (D) nodes towards the cells (cᵢ) connecting its second (B) and third (D) nodes, and conversely.

3. The system (300; 500) of claim 1 or 2, further comprising a management circuit (301) configured to receive data relative to the state of charge of the cells (cᵢ), and to control the transfer units (mⱼ) by taking these data into account.

4. The system (300; 500) of any of claims 1 to 3, wherein each unit (mⱼ) comprises at least two switches (S1, S2) and one inductive element (L; L1).

5. The system (300; 500) of claim 4, wherein said switches (S1, S2) are series-connected between the first (A) and second (B) nodes of the unit, and said inductive element (L) connects the junction point of the two switches (S1, S2) to the third node (D) of the unit.

6. The system (300; 500) of claim 4 or 5, wherein each unit (mⱼ) comprises a circuit (400) for controlling its switches (S1, S2).

7. The system (300; 500) of any of claims 4 to 6, wherein in each transfer unit (mⱼ), the switches (S1, S2) of the unit are controlled by taking into account a measurement of the current flowing through the inductive element (L) of the unit.

8. The system (300; 500) of any of claims 1 to 7, wherein each of the battery cells (cᵢ) comprises lithium and a lithium iron phosphate electrode.

9. The system (300; 500) of any of claims 4 to 7, wherein said switches (S1, S2) are MOS transistors.
